# EUROPEAN PATENT SPECIFICATION

(11) **EP 3 194 331 B1**
(45) Date of publication and mention of the grant of the patent: **12.09.2018**
(21) Application number: 15748206.8
(22) Date of filing: 27.07.2015
(51) Int. Cl.: C01B 3/08, C01B 3/06

(54) **PROCESS FOR HYDROGEN SYNTHESIS**
VERFAHREN ZUR WASSERSTOFFSYNTHESE
PROCÉDÉ DE SYNTHÈSE D'HYDROGÈNE

(30) Priority: 19.09.2014 EP 14185630
(43) Date of publication of application: 26.07.2017
(73) Proprietor: VITO NV, 2400 Mol (BE); Universiteit Antwerpen, 2000 Antwerpen (BE)
(72) Inventor: MICHIELS, Koen, B-2400 Mol (BE); SPOOREN, Jeroen, B-2400 Mol (BE); MEYNEN, Vera, B-2440 Geel (BE); QUAGHEBEUR, Mieke, B-2400 Mol (BE)
(74) Representative: Pronovem
(86) International application number: PCT/EP2015/067143
(87) International publication number: WO 2016/041672

(56) References cited:
- WO-A1-2014/030811
- US-A1- 2013 266 504
- FANGMING JIN ET AL: "High-yield reduction of carbon dioxide into formic acid by zero-valent metal/metal oxide redox cycles", ENERGY & ENVIRONMENTAL SCIENCE, vol. 4, no. 3, 4 February 2011 (2011-02-04), pages 881-884, XP055171526, ISSN: 1754-5692, DOI: 10.1039/c0ee00661k -& Fangming Jin ET AL: "Electronic Supplementary Information (ESI) for High-Yield Reduction of Carbon Dioxide into Formic Acid by Zero-Valent Metal/Metal Oxide Redox Cycles", The Royal Society of Chemistry, 4 February 2011 (2011-02-04), XP055171584, Retrieved from the Internet: URL:http://www.rsc.org/suppdata/ee/c0/c0ee 00661k/c0ee00661k.pdf [retrieved on 2015-02-24]
- TAKAHASHI H ET AL: "CO2 reduction using hydrothermal method for the selective formation of organic compounds", JOURNAL OF MATERIALS SCIENCE, KLUWER ACADEMIC PUBLISHERS, BO, vol. 41, no. 5, 1 March 2006 (2006-03-01), pages 1585-1589, XP019211622, ISSN: 1573-4803, DOI: 10.1007/S10853-006-4649-5
- SVOBODA ET AL: "Thermodynamic possibilities and constraints for pure hydrogen production by iron based chemical looping process at lower temperatures", ENERGY CONVERSION AND MANAGEMENT, ELSEVIER SCIENCE PUBLISHERS, OXFORD, GB, vol. 48, no. 12, 30 October 2007 (2007-10-30), pages 3063-3073, XP022321265, ISSN: 0196-8904, DOI: 10.1016/J.ENCONMAN.2007.05.019

## Description

### FIELD OF THE INVENTION

The present invention relates to methods for the synthesis of hydrogen gas (H₂) under mild hydrothermal conditions. The processes described herein may further be used for the treatment of iron-containing waste streams.

### BACKGROUND OF THE INVENTION

Hydrogen gas (H₂) is a commonly applied gas in diverse industries. For example, it is used as a raw material for the production of different chemicals (such as ammonia *via* the Haber-Bosch process), and as a key reagent in refineries, for example in desulfurization and hydrocracking. Moreover, hydrogen gas is considered to be a promising alternative for fossil fuels, because hydrogen fuel cells do not emit air pollutants such as CO₂, NOₓ and SOₓ, while providing an energy efficiency which can be three times higher than a typical internal combustion engine used in cars.

Conventional commercial hydrogen synthesis processes typically involve the use of fossil fuels, water, or biomass as resources. More particularly, about 98% of the annual globally produced hydrogen gas is obtained *via* the reforming of hydrocarbons, which are derived from fossil fuel reserves. However, the reforming of hydrocarbons is not a sustainable process because it requires the use of fossil fuels and results in the production of carbon dioxide. Therefore, alternative methods for producing hydrogen gas are required to meet the future hydrogen gas demand. Various alternative sustainable processes are currently being explored, such as hydrogen synthesis through the reduction of water.

Recently, there has been a renewed interest in the so-called "steam-iron process" and variants thereof, which is one of the oldest known methods of producing hydrogen and is described in German patent DE 266863.

The steam-iron process is a cyclic process for water cleavage which is typically carried out at high temperature (750-850 °C) and high pressure (above 70 bar). The process mainly involves in a first reaction (R. 1) the exothermic oxidation of metallic iron Fe⁰ in the presence of steam to form magnetite (Fe₃O₄) and hydrogen gas; and in a second reaction (R. 2) the endothermic reduction of magnetite by a reducing gas such as carbon monoxide to obtain metallic iron (or FeO), resulting in an overall conversion of water and the reducing gas such as carbon monoxide into hydrogen gas and carbon dioxide (R. 3):

3Fe° + 4H₂O → Fe₃O₄ + 4H₂ **R. 1**

Fe₃O₄ + 4CO → 3Fe° + 4CO₂ **R. 2**

CO + H₂O → CO₂ + H₂ **R. 3**

According to R. 1, the theoretical maximum yield of hydrogen gas equals 4.81w% of the consumed metallic iron, which corresponds to 537 L of hydrogen gas (standard temperature and pressure) per kg of metallic iron.

The steam-iron process was developed and operational in the early 20th century, but was later replaced by the more efficient fossil fuel-based reforming processes. It recently gained interest due to its simplicity, its feedstock flexibility, its amenability to use renewable energy sources, and the high purity of the obtained hydrogen. However, an important drawback of the steam-iron process remains its limited efficiency, high energy consumption and the generation of significant amounts of carbon dioxide. Accordingly, there is a need of improved methods for the synthesis of hydrogen gas.

### SUMMARY OF THE INVENTION

It is an aim of the present invention to provide a synthesis method for the production of hydrogen which is more economical and/or less energy consuming. The inventors have identified a method for carrying out the oxidation of an iron-containing compound such as metallic iron Fe⁰ using water to form magnetite (Fe₃O₄) and hydrogen gas (R. 1) under more favorable conditions than currently used. Indeed, the present inventors have found that by using a hydrothermal process in the presence of carbonate ions, it is possible to produce hydrogen with high purities and yield, under surprisingly mild conditions.

More particularly, the present invention thus provides a process for the synthesis of hydrogen gas (H₂) in a reactor under hydrothermal conditions, comprising (a) contacting metallic iron (Fe⁰) and/or a Fe(II)-comprising compound with an aqueous composition, the aqueous having a pH of 6.5 or higher and comprising carbonate and bicarbonate ions in a total concentration of at least 0.01 M thereby obtaining a reaction mixture; and subjecting said reaction mixture to hydrothermal conditions; (b) reacting said reaction mixture at a reaction temperature above 120 °C and not exceeding 240 °C and a pressure between 1 bar and 70 bar; thereby obtaining magnetite and hydrogen gas.

In particular embodiments of the present process for the synthesis of hydrogen gas, the total amount of carbon dioxide, carbonic acid, bicarbonate, and carbonate inside said reactor is below 0.75 mole per liter of said aqueous composition.

In certain embodiments of the present process for the synthesis of hydrogen gas, said aqueous composition is obtained by dissolving an appropriate amount of a carbonate and/or bicarbonate in an aqueous liquid, and optionally, i.e. if said aqueous composition has a pH of 6.5 or lower, adjusting the pH of said liquid.

In certain embodiments of the present process for the synthesis of hydrogen gas, said aqueous composition is obtained by dissolving an appropriate amount of carbon dioxide in an aqueous liquid.

In certain embodiments of the present process for the synthesis of hydrogen gas, the initial atmosphere within said reactor comprises at least 90 w% of carbon dioxide and/or water vapor.

In certain embodiments of the present process for the synthesis of hydrogen gas, said reaction is carried out at a temperature above 130°C and not exceeding 180°C.

In certain embodiments of the present process for the synthesis of hydrogen gas, said reaction is carried out at a pressure between 5 bar and 30 bar

In certain embodiments of the present process for the synthesis of hydrogen gas, said metallic iron and/or Fe(ll) containing compound is provided as a powder.

In certain embodiments of the present process for the synthesis of hydrogen gas, said reaction is performed in a closed reactor wherein said aqueous composition occupies between 20% and 60% of the internal reactor volume.

In certain embodiments of the present process for the synthesis of hydrogen gas, said reaction is performed under an atmosphere comprising less than 1 w% of oxygen.

In certain embodiments, the present process for the synthesis of hydrogen gas comprises contacting metallic iron and/or a Fe(ll) containing compound with an aqueous composition having a pH of 10 or higher and comprising carbonate ions in a concentration of at least 0.01 M, at a temperature above 130°C and not exceeding 180°C and a pressure between 1 bar and 30 bar; thereby obtaining magnetite and hydrogen gas; wherein the total amount of carbon dioxide, carbonic acid, bicarbonate, and carbonate inside said reactor is below 0.50 mole per liter of said aqueous composition.

Further provided herein is a process for treating a waste stream comprising metallic iron and/or a Fe(ll) comprising compound, comprising the steps of contacting said waste stream with an aqueous composition comprising a total concentration of carbonate and bicarbonate ions of at least 0.01 M, optionally, where the aqueous composition has a pH of 6.5 or lower, adjusting the pH of said aqueous composition to a pH above 6.5, and heating said aqueous composition at a temperature above 100° and not exceeding 240° and a pressure between 1 bar and 50 bar; thereby obtaining magnetite and hydrogen gas.

In certain embodiments of the present processes for the synthesis of hydrogen gas and processes for treating a waste stream, the Fe(II) comprising compound is selected from the list consisting of iron carbonate, wustite, troilite, pyrrhotite, and pyrite.

In certain embodiments of the present processes for the synthesis of hydrogen gas or for treating a waste stream, said aqueous composition has a pH of 7 or higher and comprises at least 0.05 M of carbonate ions.

In certain embodiments of the present processes for the synthesis of hydrogen gas or for treating a waste stream, said aqueous composition has a pH between 6.5 and 12.

The present processes allow for the synthesis of hydrogen gas at relatively low temperature and pressure. Hydrogen gas of high purity can be obtained, such that no further purification of the hydrogen gas is needed. Moreover, the present processes can waste streams comprising metallic iron or iron-containing compounds. The above and other provide a high hydrogen yield.

### BRIEF DESCRIPTION OF THE DRAWINGS

The following description of the figures of specific embodiments of the methods and instruments described herein is merely exemplary in nature and is not intended to limit the present teachings, their application or uses. Throughout the drawings, corresponding reference numerals indicate like or corresponding parts and features.
- **Fig. 1**: Plot of the total amount of gas (at 30°C) (non-filled markers, left axis) and the mass fraction of hydrogen gas (filled markers, right axis) obtained after 16 hours hydrothermal reaction of metallic iron powder with grain size of 100 µm at different temperatures ranging from 120° to 280°C. An initial overpressure of 5 bar carbon dioxide was used.
- **Fig. 2**: Solubility gradient of 5 bar overpressure carbon dioxide in 40 mL of a 1 M potassium hydroxide solution (no metallic iron powder present). The experiments were conducted in a closed 100 mL autoclave at room temperature (∼ 25 °C).

- **Fig. 3**: Absolute amount of hydrogen gas (at 30 °C) obtained with 5 bar of initial carbon dioxide overpressure, obtained after hydrothermal reaction of metallic iron powder with grain size of 100 µm at different temperatures.
- **Fig. 4**: Relative mass fraction of the crystalline phases in the solid products obtained after hydrothermal reaction of metallic iron powder with grain size of 100 µm at different temperatures with 5 bar of initial carbon dioxide overpressure, as determined by X-ray powder diffraction. The mass fractions are relative values.
- **Fig. 5**: Change of standard Gibbs free energy as a function of temperature for the proposed occurring reactions.
- **Fig. 6**: Changes in reactor pressure over time in function of the grain size (solid lines, left axis). The experiments were conducted at a reaction temperature of 160 °C and with an initial overpressure of 5 bar carbon dioxide (temperature: dotted line, right axis).
- **Fig. 7**: Analysis of the gaseous phase for reactions carried out in the presence of carbon dioxide gas and in the presence of nitrogen gas. The related percentage magnetite yield is represented in italics. The hydrothermal experiments were conducted at a reaction temperature of 160 °C for 16 hours with metallic iron powder with grain size of 100 µm.

### DETAILED DESCRIPTION OF THE INVENTION

While potentially serving as a guide for understanding, any reference signs used herein and in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited components, elements or method steps also include embodiments which "consist of" said recited components, elements or method steps.

Unless otherwise defined, all terms used in disclosing the concepts described herein, including technical and scientific terms, have the meaning as commonly understood by one of ordinary skill in the art. By means of further guidance, definitions for the terms used in the description are included to better appreciate the teaching of the present disclosure. The terms or definitions used herein are provided solely to aid in the understanding of the teachings provided herein.

The term "hydrothermal conditions" as used herein refers to reaction carried out in an aqueous medium, wherein the reaction temperature is above the boiling temperature of said medium at atmospheric pressure.

Provided herein are processes for the synthesis of hydrogen gas (H₂), also referred to herein as "hydrogen". The present inventors have found that hydrogen can be produced with high purity and yield under mild hydrothermal conditions, which is less energy-consuming compared to conventional hydrogen synthesis methods.

The processes described herein may involve the oxidation of metallic iron (Fe⁰) using water, to form magnetite (Fe₃O₄) and hydrogen (R. 1). In literature, this reaction is believed to involve the formation of an iron carbonate intermediate, which reacts further into magnetite:

| | |
|---|---|
| Fe⁰ + CO₂ + H₂O → FeCO₃ + H₂ | **R. 4** |
| 3FeCO₃ + H₂O → Fe₃O₄ + H₂ + 3CO₂ | **R. 5** |
| 3Fe⁰ + 4H₂O → Fe₃O₄ + 4H₂ | **R. 1** |

Reaction equations R. 4 and R. 5 suggest that carbon dioxide performs a catalytic role for the overall reaction R. 1. However, the present inventors have found that in particular the presence of carbonate ions (CO₃²⁻) in the reaction medium is important for hydrogen synthesis under mild hydrothermal conditions. The carbonate ions need not necessarily be present in the reaction medium through the dissolution of carbon dioxide gas. As used herein, the term "the reaction" refers to the overall reaction R. 1, and thus includes R. 4 and R. 5, unless explicitly specified otherwise. It is noted that in some cases, magnetite may react further to form hematite (Fe₂O₃) with the formation of additional hydrogen gas.

Accordingly, the processes described herein may comprise contacting metallic iron with an aqueous composition comprising carbonate ions under hydrothermal conditions. However, the present processes may also involve the use of Fe(II) comprising compounds instead of metallic iron, which can also lead to the formation of hydrogen and magnetite (and/or other Fe(II) containing compounds) under hydrothermal conditions. Accordingly, the processes described herein generally comprise contacting an iron-containing compound with an aqueous composition comprising carbonate ions under hydrothermal conditions. The term "iron-containing" compound as used herein refers to metallic iron or a compound comprising Fe(II). Non-limiting examples of suitable Fe(II) containing compounds include iron carbonate (FeCO₃), wustite (FeO), troilite (FeS), pyrrhotite (Fe₁₋ₓS; wherein x is between 0 and 0.2), and pyrite (FeS₂). Indeed, in the presence of carbon dioxide or carbonate ions these compounds may form iron carbonate intermediates, which can react further to form magnetite. Preferred iron-containing compounds are metallic iron and iron carbonate. In particular embodiments, the iron-containing compound is or comprises metallic iron.

Typically, hydrothermal conditions give rise to a pressure above atmospheric pressure. The reaction is then preferably performed under autogenic pressure, i.e. without applying additional pressure. In the present invention where the solvent of the liquid phase is water, hydrothermal conditions imply a pressure higher than 1 bar and a temperature higher than 100°C.

In particular embodiments, the reaction is carried out as a batch reaction in a closed reactor. However, it is envisaged that in other embodiments, the reaction may be carried out as a continuous reaction. Reactors compatible with the reagents and reaction conditions according to the present processes are well known in the art. Indeed, the present processes allow for hydrogen synthesis under mild hydrothermal conditions, and therefore does not require highly specialized reactors. The skilled person will understand that the iron-containing compound can be contacted with the aqueous composition before or after entering the

Without wishing to be bound by theory, the reactor will typically contain three different phases at any stage of the reaction:
(i) a solid phase containing one or more iron-containing compounds, such as, but not limited to metallic iron, iron carbonate, and magnetite;
(ii) a liquid phase, i.e. the aqueous composition comprising carbonate ions, said liquid phase being in contact with said solid phase; and
(iii) a gaseous phase, also referred to herein as "atmosphere", which may contain gases such as hydrogen, carbon dioxide, water vapor, and optional other (inert) gases.

Although the composition of the liquid phase may change slightly as the reaction proceeds, e.g. due to changes in pressure in the reactor, the liquid phase essentially corresponds to the aqueous composition comprising carbonate ions, which is contacted with the iron-containing compound(s). Accordingly, the features of the liquid phase as described herein typically also apply to the aqueous composition, and vice versa. It is noted that in certain embodiments, the solid phase may (initially) not be present, more particularly if the iron-containing compound is water-soluble. Typically, a solid phase will then be obtained upon the formation of magnetite.

There is a trade-off between the relative volumes of the liquid phase and the gaseous phase within the reactor. A higher volume of liquid phase may speed up the reaction, whereas the volume of the gaseous phase limits the amount of hydrogen gas that can be produced within a batch. Typically, the aqueous composition will occupy between 20% and 60% of the reactor volume. Accordingly, the gaseous phase will typically occupy between 40% and 80% of the reactor volume. The volume of iron-containing compound is typically below 5% of the reactor volume. In certain embodiments, the volume of iron-containing compound is below 3% of the reactor volume, preferably below 1% of the reactor volume. It is not excluded however, that in certain embodiments the volume of iron-containing compounds is above 5% of the reactor volume.

The term "aqueous solution" or "aqueous composition" as used herein, respectively refers to a solution or composition wherein the solvent comprises at least 50 w% (percent by weight) water. Possible co-solvents include but are not limited to alcohols such as ethanol or propanol. In preferred embodiments, the solvent used for preparing the aqueous carbonate-comprising composition comprises at least 95% water, preferably at least 99% water. Most preferably, the aqueous solution or composition is essentially free from solvents other than water. As used herein, the term "aqueous composition" includes aqueous solutions. In preferred embodiments, the aqueous composition referred to herein is an aqueous solution.

In the methods envisaged herein, an iron-containing compound is contacted with an aqueous composition comprising carbonate ions.

In aqueous solutions and compositions, carbonate ions typically form an equilibrium with bicarbonate ions (HCO₃⁻) and carbonic acid (H₂CO₃):

CO₃²⁻ (aq) + H⁺ (aq) ⇆ HCO₃⁻ (aq) **R. 6**

HCO₃⁻ (aq) + H⁺ (aq) ⇆ H₂CO₃ (aq) **R. 7**

Accordingly, the liquid phase typically not only comprises carbonate ions, but also bicarbonate ions and carbonic acid. In the present processes, the liquid phase has a pH of above 6.5, at which the relative concentration of carbonic acid is negligible with respect to the amounts of bicarbonate and carbonate ions.

At a given total concentration of carbonate and bicarbonate ions in solution, the relative amount of carbonate ions increases with increasing pH of the solution. At a pH above about 10.5, the concentration of carbonate ions becomes larger than the concentrations of bicarbonate, and at a pH above about 11.5 the relative concentration of bicarbonate ions becomes negligible. However, increasing the pH to about 10 or more may render the formation of iron carbonate being less favorable. Accordingly, the pH of the aqueous composition will typically be kept below 14, preferably below 13. In particular embodiments, the process as envisaged herein will thus comprise contacting one or more iron-containing compounds with an aqueous composition comprising carbonate ions having a pH of 6.5 or higher, but preferably below 13. In particular embodiments, the aqueous composition comprising carbonate ions has a pH ranging from 6.5 to 12; more particularly ranging from 7 to 11. In specific embodiments, the aqueous composition comprising carbonate ions may have a pH ranging from 6.5 to 9.5.

The pH of an aqueous solution or composition can be increased by adding an appropriate amount of one or more bases to the solution. Suitable bases include, but are not limited to sodium hydroxide and/or potassium hydroxide. Accordingly, in particular embodiments, the aqueous composition comprises sodium hydroxide and/or potassium hydroxide. In further particular embodiments, the concentration of sodium hydroxide and/or potassium hydroxide is between 0.05 and 5M, such as about 1M. Typically, the aqueous composition used in the present process is not buffered. The carbonate/bicarbonate ions can provide a buffer around a pH of about 10.3, but this is not required for the present processes.

As described above, the present processes involve contacting an iron-containing compound with an aqueous composition comprising carbonate ions. The presence of carbonate ions in the liquid phase is required to allow for the formation of hydrogen gas under the mild conditions described herein (see further). Typically, this means that contact is established between a solid phase comprising iron and a liquid phase comprising water and carbonate ions. It will be clear to the skilled person that such contact can be established in various ways. For example, this may involve first contacting the iron-containing compound(s) with water, followed by addition of carbonate ions; or by contacting the iron-containing compound(s) with an aqueous composition which already comprises carbonate ions. Furthermore, if needed the pH of the aqueous composition may be adjusted before and/or after contacting the aqueous composition with the iron-containing compound. If the present processes involve the use of water soluble Fe(ll) containing compounds, then the iron may be present as Fe²⁺ ions in solution. Again, the Fe(II) containing compounds may be added prior to the carbonate ions, or vice versa.

As indicated above, carbonate ions in aqueous solutions and compositions are in equilibrium with bicarbonate ions. The liquid phase in the processes described herein comprises carbonate and bicarbonate in a total concentration (i.e. the sum of the respective concentrations of carbonate and bicarbonate) of at least 0.01 M, preferably at least 0.05 M, most preferably at least 0.1 M. Accordingly, the present processes involve contacting an iron-containing compound with an aqueous composition comprising a total concentration of carbonate and bicarbonate of at least 0.01 M, preferably at least 0.05 M, even more preferably at least 0.1 M. It is further preferred that the molar ratio carbonate/bicarbonate in the aqueous composition is at least 1, at least 5, or even at least 10. This molar ratio is determined by the pH of the aqueous composition, as described above. In certain embodiments, the aqueous composition has a pH of 9 or higher and comprises at least 0.025 M of carbonate ions. In further embodiments, the aqueous composition has a pH of 10 or higher and comprises at least 0.050 M of carbonate ions.

An aqueous composition comprising carbonate ions as used in the present processes can be prepared in various ways. More particularly, a carbonate-containing solution can be obtained by direct dissolution of a carbonate or bicarbonate, or *"in situ"* by dissolution of carbon dioxide from the gaseous phase within the reactor.

In particular embodiments, the aqueous composition which forms the liquid phase may be obtained by dissolving an appropriate amount of a carbonate and/or bicarbonate into water or an aqueous liquid, to obtain a carbonate solution of the desired concentration for the reaction.

Any carbonate and/or bicarbonate having an appropriate solubility in the aqueous composition to reach the desired concentration of carbonate ions may be used. Suitable carbonates include but are not limited to carbonate salts such as sodium carbonate, potassium carbonate, and lithium carbonate. Suitable bicarbonates include but are not limited to bicarbonate salts such as sodium bicarbonate, potassium bicarbonate, and lithium bicarbonate.

Optionally, more particularly if the aqueous composition has a pH of 6.5 or lower, the preparation of the aqueous composition may further comprise adjusting the pH through the addition of one or more bases, as described above. The pH adjustment may be done prior to or after dissolution of the carbonate and/or bicarbonate.

Additionally or alternatively, the aqueous composition may be obtained by dissolving an appropriate amount of carbon dioxide gas into water or an aqueous liquid, to obtain a carbonate solution of the desired concentration. Indeed, carbon dioxide gas is known to dissolve in water, thereby forming carbonic acid:

CO₂ (aq) + H₂O ⇆ H₂CO₃ (aq) **R. 8**

The dissolution of carbon dioxide can be facilitated by increasing the pH of the solution. Indeed, an increased pH will favor the transformation of carbonic acid to bicarbonate and/or carbonate ions, thereby increasing the solubility of carbon dioxide according to equation R. 8.

Without being bound in any way by theory it is believed that, when making use of a potassium hydroxide solution, the conversion of carbon dioxide and a part of potassium hydroxide takes place, leading to the formation of potassium carbonate.

CO₂ + 2KOH → K₂CO₃ + H₂O

It can be assumed that the formation of potassium carbonate occurs in two steps. The first step includes the dissolution in and reaction with water of carbon dioxide, leading to the formation of carbonic acid and in the second step this carbonic acid is converted into potassium carbonate with the aid of potassium hydroxide.

Accordingly, in specific embodiments, the aqueous composition may be obtained by dissolving an appropriate amount of carbon dioxide in an aqueous liquid at a pH of at least 8, preferably at least 10, more preferably at least 12. It is clear that as the dissolution of carbon dioxide results in the formation of an acid, the pH of the solution will decrease as more carbon dioxide dissolves. If desired, a subsequent adjustment of the pH to a higher pH can be done by adding one or more bases as described above.

In practice, the dissolution of carbon dioxide is typically carried out by contacting an aqueous liquid with carbon dioxide gas, having a (partial) pressure between 1 and 20 bar. This may be performed inside or outside of the reactor. If performed within a closed reactor, the pressure is preferably chosen such that all or most the carbon dioxide can dissolve in the liquid phase. The inventors have found that a carbon dioxide pressure between 3 and 10 bar may provide particularly good results. However, the optimal pressure may depend on the ratio of the volume of the liquid and gaseous phase in the reactor, and may be higher when the gas/liquid volume ratio is low and lower when this ratio is high.

Regardless of the method used for producing the carbonate-containing solution and the ratio of the volume of the liquid and gaseous phase in the reactor, it is preferred that the sum of the amounts of carbon dioxide, carbonate ions, bicarbonate ions, and carbonic acid, is below 0.75 moles per liter of the aqueous solution. In this way, it can be ensured that most of these components will be present in solution, thus leaving a gaseous phase which contains a minimal amount of carbon dioxide after reaction. The inventors have found that this not only allows for producing hydrogen gas of high purity, but may also increase the hydrogen yield of the process. In further embodiments, the sum of the amounts of carbon dioxide, carbonate ions, bicarbonate ions, and carbonic acid, is below 0.50 moles per liter of the liquid phase.

It is clear from equation R. 1 that the carbonate and other components such as bases in the aqueous composition are not consumed in the overall reaction. Accordingly, it is possible to recycle the aqueous composition in a further batch process. As some water is consumed in the reaction, the carbonate concentration may gradually increase after several uses of the solution. Accordingly, from time to time an amount of water may be added to the solution between reactions, to restore the original carbonate concentration.

The processes described herein allow for the synthesis of hydrogen gas under mild hydrothermal conditions. The reaction is carried out at a temperature between 120°C and 240°C, and at a pressure between 1 bar and 70 bar. These conditions require much less energy to maintain than the conditions required for the conventional steam-iron process (temperature of 750-850 °C, pressure above 70 bar). In further embodiments, the reaction is carried out at a temperature which is a temperature between 120°C and 240°C (i.e. a temperature which is above 120°C and not exceeding 240°C), and at a pressure between 1 bar and 50 bar.

In particular embodiments, the reaction is carried out at a temperature, which is a temperature between 130°C and 180°C. In yet further embodiments, the reaction is carried out at a temperature above 140°C but not exceeding 175°C, for example at about 160°C. More particularly it is envisaged that a constant or nearly constant temperature (+/-5°C) is continuously maintained throughout the reaction (= reaction temperature). In particular embodiments, this implies that the reaction temperature is maintained for at least 4hrs, more particularly at least 12 hrs, such as 16hrs. The inventors have found that particularly high hydrogen yields can be obtained when working at a temperature within the above temperature ranges. These temperatures are surprisingly low compared to conventional water cleavage processes involving the reduction of iron.

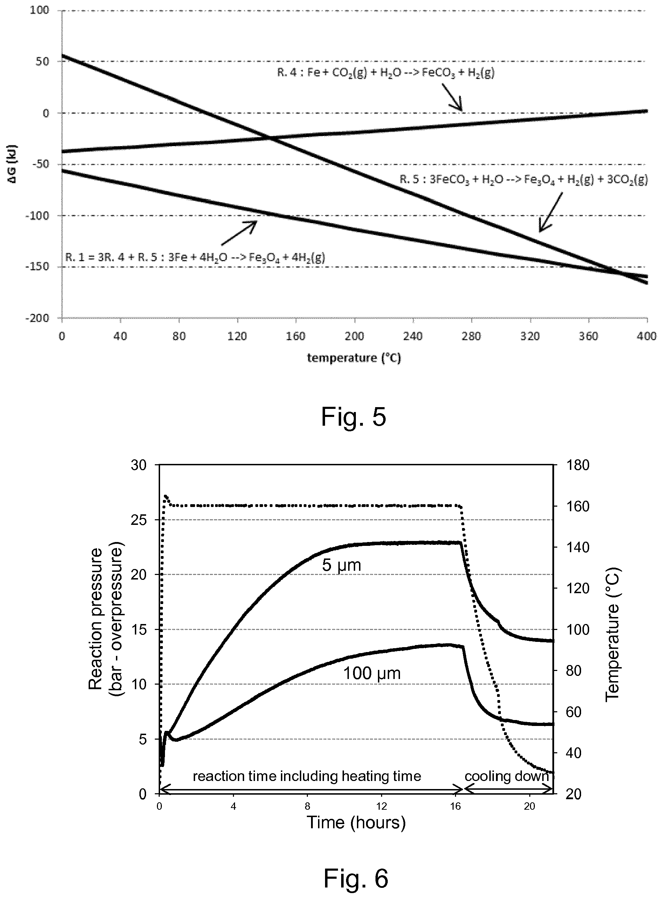

In preferred embodiments, the reaction is carried out at a pressure between 1 bar and 30 bar, more particularly between 5 and 30 bar, even more particularly between 5 and 25 bar. The pressure typically is not constant and can change as the reaction proceeds, particularly in a closed reactor. Indeed, in a closed reactor, the pressure will increase as hydrogen gas is generated. In a typical experiment, the reaction may start at a pressure between 1 and 5 bar (at a temperature of about 25°C), and may be terminated at a pressure between 20 and 30 bar (at the reaction temperature) (see further, **Fig. 6**).

As the reaction proceeds and more hydrogen gas is generated, the partial pressure of hydrogen gas in the reactor will increase. The reaction will typically be terminated as soon as a certain (total) pressure is reached within the reactor, or when the reaction speed (i.e. the amount of hydrogen gas generated per unit of time) drops below a certain threshold level. Accordingly, the present processes may involve monitoring the total pressure within the reactor and/or the partial pressure of hydrogen gas within the reactor.

The atmosphere within the reactor may comprise other gases than the hydrogen gas generated during the reaction. Typically, such other gases (if present) were also initially present in the reactor, and their presence in the final product may be desirable or not.

Indeed, certain applications do not require pure hydrogen gas but a mixture of hydrogen and one or more other gases. For example, mixtures of nitrogen gas (N₂) and hydrogen gas are used for welding. Accordingly, in certain embodiments, the reaction may be carried out in the presence of nitrogen gas.

In certain embodiments, it is preferred that the hydrogen gas obtained *via* the present processes is as pure as possible. In these embodiments, it is preferred that upon termination of the reaction, most of the gaseous phase present in the reactor is hydrogen gas. Typically, the gaseous phase is cooled first, in order to condensate most water vapor present in the gaseous phase. In particular embodiments, upon cooling the reactor to a temperature below 30°C, the gaseous phase comprises at least 95 mol% of hydrogen gas, preferably at least 97 mol%, more preferably at least 99 mol%.

This can be obtained by ensuring that at the start of the reaction, the main components of the atmosphere within the reactor can dissolve in the liquid phase. Typically, such components will include water vapor and carbon dioxide. Accordingly, in certain embodiment, the initial atmosphere within the reactor, i.e. the atmosphere before any significant amount of hydrogen has been formed - either at room temperature or at the reaction temperature, comprises at least 75 mol% of carbon dioxide and/or water vapor; preferably at least 90 mol%, more preferably at least 95 mol%, and most preferably at least 99 mol%. In order to allow for most carbon dioxide to dissolve in the liquid phase, it is further preferred that the sum of the amounts of carbon dioxide, carbonate ions, bicarbonate ions, and carbonic acid, is below 0.75 moles per liter of the liquid phase, as described above.

As the present process involves the oxidation of iron with water, it is preferred that the atmosphere within the reaction is free from other oxidizing agents, in particular oxygen gas (O₂). Indeed, any oxygen present in the reactor can lead to oxidation of metallic iron, which is then no longer available for reaction with water according to equation R. 1. Moreover, any hydrogen formed according to equation R. 4 or R. 5 will react with oxygen to form water. Accordingly, the presence of oxygen may significantly reduce the yield of the process. It is noted however that an initial presence of oxygen in the reactor does not prevent the synthesis of hydrogen altogether, as long as an excess of iron is used compared to the amount of oxygen in the reactor. Nevertheless, in preferred embodiments, the initial atmosphere within the reactor comprises less than 1 mol% of oxygen, more preferably less than 0.1 mol%.

The reaction is typically carried out under stirring of the liquid phase, in order to ensure an optimal contact between the liquid and solid phase. In particular embodiments, the iron-containing compound used in the present processes is provided as a powder. This provides a large surface-to-volume ratio, and allows for speeding up reaction. Preferably, this ratio is as high as possible. This helps speeding up the reaction, and can ensure that most or all of the iron reacts. In certain embodiments, the iron-containing compound is provided as a powder having an average grain size below 25 µm. In further embodiments, the powder has an average grain size below 10 µm, for example about 5 µm. The average particle size values referred to herein are weight averages, as determined using laser diffraction of the (dispersed) dry powder. Preferably, the span of the size distribution is in the range from 1 to 3.

In certain embodiments, the present processes may comprise contacting an iron-containing compound with an aqueous composition having a pH of 10 or higher and comprising at least 0.01 M carbonate ions, at a temperature between 130°C and 180°C and a pressure between 1 bar and 30 bar; thereby obtaining magnetite and hydrogen gas; wherein the total amount of carbon dioxide, carbonic acid, bicarbonate, and carbonate inside said reactor is below 0.50 mole per liter of said aqueous composition. The present inventors have found that under such conditions, particularly high hydrogen yields can be obtained.

The present processes provide an alternative for equation R. 1 of the steam-iron process as described above, and allows for converting metallic iron and/or other iron-containing compounds to magnetite under mild hydrothermal conditions. The present processes can be implemented in a cyclic process, wherein the magnetite is converted back to metallic iron, for example according to equation R. 2.

In certain application, the reconversion of magnetite to metallic iron is not required. For example, the present processes may be used for the treatment of iron-containing (solid) waste streams, more particularly waste streams comprising iron-containing compounds as described above. Such waste streams may be produced in plating shops, steel mills, foundries, ironworks, chemical milling, wire drawing operations, grinding and cutting of ironwork and the like. The present processes provide an added value to such waste materials by using them for the synthesis of hydrogen gas. Thus, the present processes may be used of the treatment of waste materials comprising one or more iron-containing compounds. The pre-treatment of the waste materials for the present processes is limited: the waste stream may be mixed as such with water comprising an appropriate amount of carbonate ions as described above, and bases may be added to provide a suitable pH.

In certain embodiments, the waste stream may be subject to one or more processing steps selected from:
- increasing the iron content, for example *via* magnetic separation;
- decreasing the average particle size of the (solid) waste stream;
- washing, e.g. to remove soluble salts from the waste stream; and
- removing materials which may have a negative effect on the reaction, such as an oxidator, for example *via* physical or chemical separation.

In certain embodiments, provided herein is a process for treating a waste composition comprising iron-containing compounds, comprising:
- contacting said waste composition with an aqueous composition comprising a total concentration of carbonate and bicarbonate ions of at least 0.01 M least carbonate ions;
- optionally, adjusting the pH of said aqueous composition to a pH above 6.5; and
- heating said aqueous composition at a temperature between 100° and 240° and a pressure between 1 bar and 50 bar; thereby obtaining magnetite and hydrogen gas.

In certain embodiments, the aqueous composition which is contacted with the iron-containing waste composition is also a waste composition, for example a basic aqueous waste solution having a pH above 10 (which allows for the dissolution of carbon dioxide); and/or aqueous waste solutions comprising carbonate ions.

### EXAMPLES

The following examples are provided for the purpose of illustrating the claimed methods and applications and by no means are meant and in no way should be interpreted to limit the scope of the present invention.

### 1. Materials and methods

### 1.1 Materials

Commercial metallic iron powders having a purity of at least 99% and having average grain sizes of 100 µm and 5 µm were obtained from UTP Schweissmaterial and Merck Millipore, respectively. Reactions were carried out using an aqueous potassium hydroxide (Alfa Aesar, 85% minimum) solution of 1 M, having a pH of approximately 14 to promote the dissolution of carbon dioxide. No pH buffering system was present. The solution was prepared using degassed Milli-Q water. Carbon dioxide gas having a purity of at least 99.5% was purchased from Air Products.

### 1.2 Experimental

Hydrothermal reactions were performed in closed 100 mL premex reactor ag® autoclaves. The temperature, pressure and stirring speed were adjusted and logged online, using a digital control unit and logging unit. The heating time, defined as the time to increase the temperature to the set point, is dependent on the desired reaction temperature. Inherent to the applied heating system, a short-time temperature overshoot of maximum 5 °C was observed. However, in all cases the set point was reached in less than 30 minutes.

The following general experimental method was applied. First, 4.10⁻² mol metallic iron was loaded in an autoclave, followed by adding, 40 mL of a 1 M potassium hydroxide solution. Subsequently, the autoclave was flushed with carbon dioxide to remove the contained air and thus create an oxygen free atmosphere. Thereafter, the remaining free space of the autoclave (approximately 60 mL) was solely filled, at approximately 25°C with the desired amount of carbon dioxide gas. Typically, 5 bar overpressure was added, which calculated based on the ideal gas law, corresponds to 15mmol CO₂. Hereafter, the initial carbon dioxide overpressure, at 25 °C and taking in a volume of approximately 60 mL, will be represented as *pᵢ(CO₂).* Finally, temperature was increased to the set reaction temperature and stirring at 250 revolutions per minute was enabled.

Stirring was applied to avoiding that the solid phase will stick to the bottom of the autoclave, and to ensure sufficient contact between the different phases. Reactions were carried out for 16 hours, including the heating time but excluding the time to cool to room temperature. After these 16 hours, the autoclave was cooled down in ambient air to approximately 30 °C, while continuous stirring at 250 rpm. Note that some of the experiments are performed under different conditions. In such cases, the differences in conditions are explicitly mentioned.

### 1.3 Analysis

The gas phase constituents in the reactor were identified and quantified after reaction by coupling the autoclave, at a temperature of approximately 30°C,, to a Bruker 450-GC gas chromatograph of which the thermal conductivity detector (TCD) channel was calibrated for carbon dioxide and hydrogen with the aid of calibration gas mixtures provided by Air Products. The percentage hydrogen yields were calculated based on R. 1 and the ideal gas law with the measured end pressure at 30 °C, the measured molar percentage of hydrogen gas and the estimated gas volume as parameters.

Various *ex situ* analytical techniques were applied to study the solid phase, recovered over a Whatman mixed cellulose ester membrane filter ME25 (0.45 µm pore size). X-ray powder diffraction was carried out with a PANalytical X'PERT PRO system with copper anode material and made it possible to identify (ICDD database) and semi-quantify (ICSD database) the crystal phase products. The obtained diffractograms were analyzed with the aid of HighScore Plus software. SEM images were made with a JEOL JSM-6340F apparatus equipped with a Bruker XFlash Detector 5030 and a Bruker QUANTAX 200 EDS system to investigate changes on grain size level (the solid samples were embedded and polished). Grain size distributions were measured by laser diffraction particle size analyses, which were performed by a Malvern Mastersizer X apparatus (dry powder method).

### 2. Results

### 2.1 Evaluating the reaction system

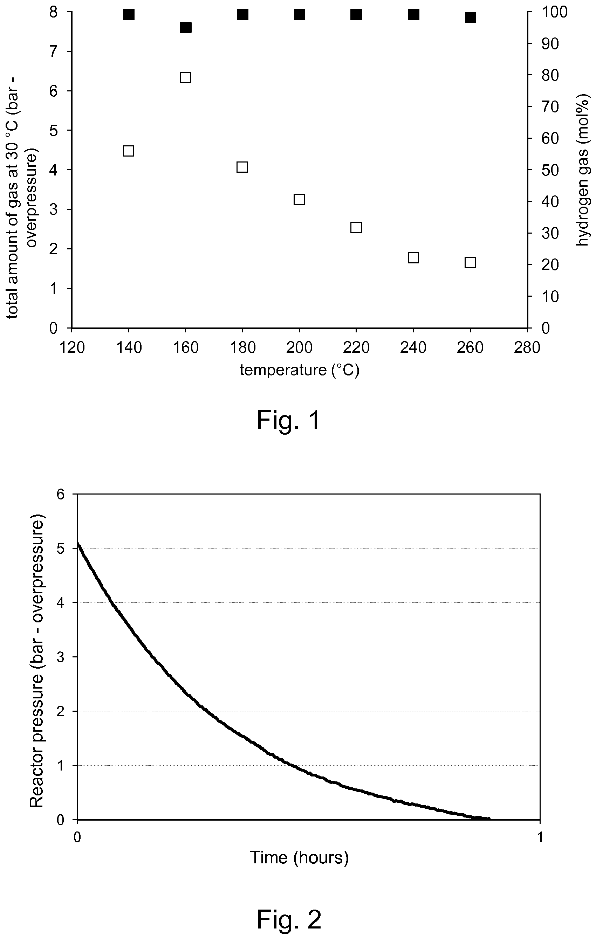

Hydrothermal experiments were performed at varying reaction conditions with metallic iron powder with grain size of 100 µm to evaluate the conditions for maximal hydrogen gas production. Experiments were conducted (at 25°C taking in a volume of approximately 60 ml),with an initial carbon dioxide overpressure *pᵢ(CO₂)* of 5 bar, in a temperature range from 140 °C up to 260 °C with steps of 20 °C. **Fig. 1** shows the total amount of gas after reaction at 30 °C, expressed as the amount of overpressure, and the molar percentage of hydrogen gas obtained.

Highly pure hydrogen gas (> 99mol%) is obtained after reaction at all tested temperatures above 120°C. The absence of carbon dioxide after reaction is due to the solubility of carbon dioxide. At room temperature, 5 bar carbon dioxide (overpressure) can dissolve almost completely in 40 mL of a 1 M potassium hydroxide solution, as shown in **Fig. 2****.**

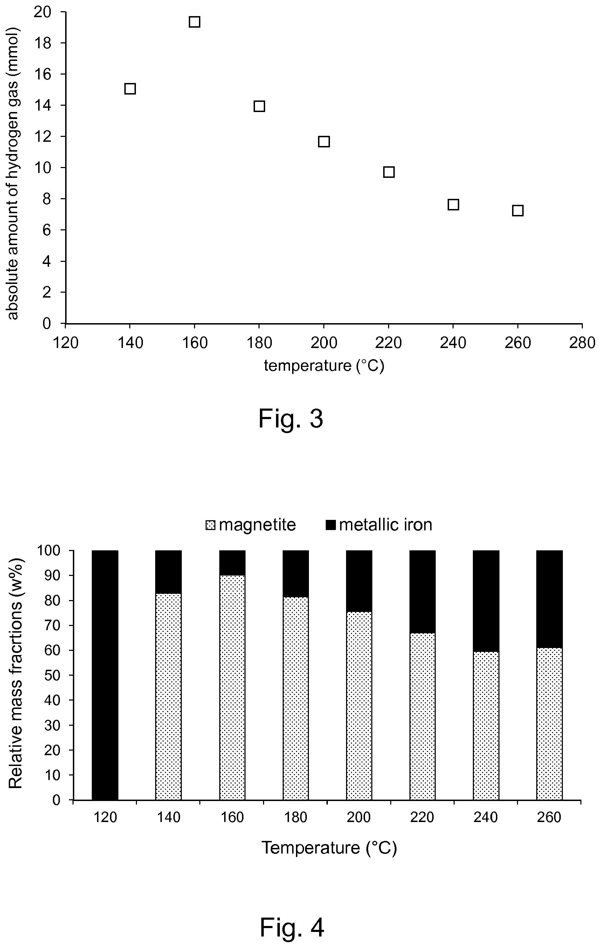

**Fig. 3** shows the absolute amounts of produced hydrogen in mmol for each experiment. These amounts were calculated by applying the measured total amounts of gas and the mass fractions of hydrogen gas. At an initial carbon dioxide overpressure of 5 bar, a maximum of approximately 7 bar hydrogen gas at a reaction temperature of 160 °C is found.

From X-ray powder diffraction analyses, it was found that two different crystalline phases are present in the solid product after reaction: metallic iron (Fe) and/or magnetite (Fe₃O₄). From semi quantitative analyses, it was found that no amorphous phases are present. The different phases together with their relative mass fractions, present in the solid products that are obtained under different reaction conditions, are shown in **Fig. 4****.**

The X-ray powder diffraction results clearly point out the influence of the amounts of carbon dioxide used on the final solid product compositions. Indeed, the results reveal that metallic iron is converted into magnetite at all applied temperatures, except at 120 °C. Moreover, the highest amount of magnetite is found at a reaction temperature of 160 °C, which is in agreement with the maximal amount of hydrogen gas produced.

At higher reaction temperatures the reaction towards magnetite may be induced by altered kinetics. However, a higher reaction temperature may also have a negative influence on the reaction, since the overall reaction R. 1 is exothermic.

**Fig. 5** suggest that R. 4, which is the conversion of metallic iron in iron(II) carbonate, becomes thermodynamically more difficult as temperature increases due to a less negative difference in the Gibbs free energy. On the contrary, the conversion of iron(II) carbonate in iron(II,III) oxide (R. 5) preferably takes place at higher temperatures because of a decrease of the difference in the Gibbs free energy as a function of temperature. Hence, R. 4 and R. 5 have opposite optimum temperature conditions. This observation suggests that an optimum reaction temperature for R. 1 can be expected, probably at lower temperatures, in order to obtain the highest percentage yield of hydrogen gas. The presumption is reinforced by the observation that no siderite is observed in the solid phase after hydrothermal treatment, indicating that R. 5 is a fast reaction and R. 4 is the rate limiting step. However, the optimal temperature can only be experimentally determined because reaction kinetics has to be included. The above mentioned experiments with pi(CO2) = 5 bar conducted in a temperature range from 140 °C up to 260 °C with steps of 20 °C, show that the optimal temperature is 160 °C.

### 2.2 Influence of the grain size of metallic iron powder

In order to study the effect of the grain size, these results were compared to similar experiments using two metallic iron powders having an average grain size of 5 µm and 100 µm, respectively, which were hydrothermally treated at 160 °C with *pi(CO2)* = 5 bar. The changes in reactor pressure, during these experiments are shown in **Fig. 6****.**

The results indicate that regardless of the iron particle grain size, the reactor pressure changes as follows: firstly, during the first 10 minutes, the reaction pressure decreases due to carbon dioxide dissolution and the non-existing or weak autogeneous pressure effect of water (< 130 °C). Secondly, the autogeneous pressure of water increases in a time span of 20 minutes as a result of the rising temperature (130 - 160 °C). Thirdly, after a small temperature overshoot, the reaction temperature settles to 160 °C and the reaction pressure increases further what can be explained by the formation of hydrogen gas (160 °C). Finally, after a reaction time of 16 hours, the reactor is cooled. Hence, the reactor pressure decreases due to the attenuation and eventually the disappearance of the autogeneous pressure effect of water. The reactor pressure present after reaction at 30 °C, which is defined as the end pressure, is mainly derived from the formed hydrogen gas, as described above.

**Fig. 6** further shows that a steeper rise in pressure is obtained for 5 µm iron powder, with respect to the same amount of coarser 100 µm powder, thus indicating that the reactivity (*i.e.* reaction kinetics) is correlated to the available specific surface area. The reaction rate can be calculated to be approximately 2.5 times higher for 5µm iron powder compared to 100 µm iron powder. Indeed, the derivatives of the smoothed pressure-time curves suggest that the effective reaction time, defined as the time span after which the reactor pressure becomes constant, is approximately 12 hours in case of 5 µm grains and at least 16 hours for 100 µm grains. Moreover, the difference in end pressure, which is an indicator for the amount of hydrogen produced, proves that the conversion of metallic iron into magnetite is more complete for finer iron grain sizes.

The solid phase obtained in both experiments before and after hydrothermal treatment was studied. Scanning electron microscopy (SEM) images and Energy-Dispersive x-ray Spectroscopy (EDS) elemental mapping revealed that in the 100 µm particles, the formation of magnetite takes place at the surface of the metallic iron grains, whereas the inner core of the grains is not converted. The 5 µm particles on the other hand were entirely converted into magnetite.

The percentage hydrogen yields of the hydrothermal treatments of the two metallic iron powder were calculated based on R. 1 and the ideal gas law with the measured end pressure at 30 °C, the measured mass fraction of hydrogen gas and the estimated gas volume as parameters. The percentage hydrogen yields are 81% for the 5 µm powder and 38% for the 100 µm powder. In addition to the percentage hydrogen yields, the percentage magnetite yields were similarly evaluated at respectively 78% and 36%. These yield calculations confirm the higher conversion in case of metallic iron powder with small grain sizes.

### 2.3 Reference tests on the role of potassium hydroxide

pi(CO2) = 5 bar is equal to 15 mmol carbon dioxide (calculated by applying the ideal gas law with 25 °C and 60 mL as parameters). This amount of carbon dioxide is able to dissolve into 40 mL of a 1 M potassium hydroxide solution (i.e. 40 mmol KOH) of which the pH is (initially) approximately 14 (see Fig. 2). As experimentally observed, the absence of a buffering system and the occurrence of chemical equilibria of carbon dioxide in the liquid phase cause a decrease of pH to approximately 11. At this pH, carbon dioxide is in the liquid phase mainly present in the form of carbonate ions (CO₃²⁻). Hence, we suggest that the conversion of carbon dioxide (15 mmol) and a part of potassium hydroxide (30 mmol), leading to the formation of potassium carbonate (15 mmol), takes place, represented by R. 8'. Probably, the formation of potassium carbonate occurs via two steps. The first step includes the dissolution of carbon dioxide, leading to the formation of carbonic acid (R. 6'). In the second step, this carbonic acid is converted into potassium carbonate with the aid of potassium hydroxide (R. 7').

| | |
|---|---|
| CO2 + H2O → H2CO3 | R. 6' |
| H2CO3 + 2KOH → K2CO3+ 2H2O | R. 7' |
| CO2 + 2KOH → K2CO3+ H2O | R. 8' |

In order to confirm the role of potassium hydroxide, two hydrothermal reference tests were conducted. The first hydrothermal reference test applied a 40 mL 0.375 M potassium carbonate (J.T. Baker Chemical, 99.9%) aqueous solution (i.e. 15 mmol K2CO3), of which the pH amounted approximately 11,. This experiment was performed for 16 hours at 160 °C with 40 mmol of metallic iron powder with grain size of 5 µm in the presence of an anoxic (carbon dioxide flushed) atmosphere, without pi(CO2). The second hydrothermal reference experiment aimed to investigate the absence of KOH in the reaction system and applied 40 mL Milli-Q water. This experiment was also performed for 16 hours at 160 °C with 40 mmol of metallic iron powder with grain size of 5 µm with the presence of pi(CO2) = 5 bar. When potassium carbonate was present in solution, an identical curve is obtained compared to the curve obtained with an experiment with 40 mL of a 1 M potassium hydroxide solution and pi(CO2) = 5 bar (see Fig. 6), except for the initial pressure change because of the absence of an initial carbon dioxide overpressure. Gas phase and solid phase analyses confirm this similarity: a percentage hydrogen yield and percentage magnetite yield higher than 80% were obtained. When only Milli-Q water and pi(CO2) = 5 bar were present in the reaction system, the pressure evolution curve is significantly different compared to the curve obtained with the standard experiment (40 mL of a 1 M potassium hydroxide solution and pi(CO2) = 5 bar). Firstly, during the first 10 minutes, the reaction pressure did not decrease as significantly. This observation indicates a decrease in the dissolution of carbon dioxide. Secondly, after the first 10 minutes, the reactor steeply rises up to an overpressure of approximately 13.5 bar in 20 minutes, in which the reactor temperature increases from 130 °C up to 160 °C. We suggest that the presence of a significant amount of carbon dioxide in the gas phase causes this rapid increase in reactor pressure according to Gay Lussac's. Both observations indicate a lower CO₂ dissolution in the liquid phase compared to the standard experiment. The third observed difference in the pressure evolution curve is the slower and lower increase in reaction pressure when the reactor temperature is constant at 160 °C due to a decrease in the formation of hydrogen gas. The latter is confirmed by the lower end pressure of approximately 9.5 bar (overpressure). Besides the differences in the reactor pressure evolution over time, differences in analysis results of the gas and solid phase were observed. GC analyses of the gas phase showed the presence of 70-75 mol% hydrogen and 30-25 mol% carbon dioxide. While X-ray powder diffraction analyses indicated the presence of three different crystalline phases, namely metallic iron Fe0, siderite FeCO₃ and magnetite Fe₃O₄. Hence, these results of the second reference experiment show that in the absence of potassium hydroxide, the dissolution of carbon dioxide and the formation of hydrogen are less complete.

Based on both reference tests, we conclude that potassium hydroxide is necessary to enhance the dissolution of carbon dioxide and the formation of potassium carbonate in the carbon dioxide mediated hydrothermal iron oxidation process. Furthermore, mainly CO₃²⁻ ions seem to be the active CO₂ source in assisting the formation of hydrogen gas. Furthermore, the pH of the 0.375 M potassium carbonate solution remained unchanged, regarding measurements before and after hydrothermal treatment. Moreover, no carbon containing compounds were found in the gas phase, and no significant amounts of organic carbon containing compounds were detected in the liquid phase either. These observations indicate that net no carbonate ions are consumed during the reaction. Hence, the reuse of the aqueous solution obtained after a hydrothermal treatment seems to be possible if the consumed amount of water (R. 1) is added to this solution.

In order to confirm this indication, we performed a reference test in which pure 5 µm metallic iron powder was hydrothermally treated, in absence of additional carbon dioxide gas, for 16 hours at 160 °C in the presence of a recovered aqueous solution, to which the consumed amount of water was added. This aqueous solution was recovered from a standard experiment in which carbonate ions were in situ formed by the dissolution of approximately 15 mmol carbon dioxide in 40 mL of a 1 M potassium hydroxide solution. The obtained percentage hydrogen yield and percentage magnetite yield, both higher than 80%, and the pressure evolution curve of this reference experiment are similar to those obtained with a standard experiment (16 hours at 160 °C with 40 mmol of metallic iron powder with grain size of 5 µm, 40 ml of a 1 M potassium hydroxide solution and pi(CO₂) = 5 bar). Hence, the reaction medium can be reused, which implies that the consumption of potassium hydroxide can be significantly reduced Moreover, the in situ formed carbonate ions seem to assist the hydrogen formation by acting as catalysts.

Thus, these experiments demonstrate that the carbonate ions (CO₃²⁻) that are formed in the reactionsolution play an essential role. These can be formed by the dissolution of CO₂ gas in a KOH solution, causing the formation of K₂CO₃.

### 2.4 Reference test with nitrogen gas

In order to benchmark the processes described herein and to confirm the assisting role of carbonate ions, hydrothermal reference tests, performed at 160 °C with metallic iron powder with grain size of 100 µm, were conducted in a nitrogen atmosphere (*Air Products,* purity of at least 99.998%). In the absence of carbon dioxide, an overall conversion of metallic iron and water to magnetite and hydrogen takes place which is similar to the conversion with the processes described herein (R. 1), albeit *via* another mechanism (R. 9 and R. 10):

| | |
|---|---|
| Fe⁰ + 2H₂O → Fe(OH)₂ + H₂ | **R. 9** |
| 3Fe(OH)₂ → Fe₃O₄ + H₂ + 2H₂O | **R. 10** |
| 3Fe⁰ + 4H₂O → Fe₃O₄ + 4H₂ | **R. 1** |

R. 9 is known as hydrogen corrosion, a metal corrosion reaction which occurs in the presence of anoxic water. R. 10 is known as the "Schikorr reaction". These partial reactions are based on iron(II) hydroxide as intermediate.

In case of a hydrothermal experiment with an initial carbon dioxide overpressure of 5 bar as described above, the pH of the aqueous potassium hydroxide solution decreases rapidly from a value of 14 to a stable value of about 11, due to the dissolving of carbon dioxide. Accordingly, for a first series of reference tests, the pH of the aqueous solutions was adjusted with potassium hydroxide to approximately 11 and the initial nitrogen overpressure *pi(N2)* was set as 0 bar (= flushed with nitrogen gas) or 5 bar. The results obtained for these experiments show that the oxidation of iron under these reference conditions is limited: the percentage hydrogen yields and percentage magnetite yields were very low to negligible, possibly due to the slow formation of iron(II) hydroxide under the applied conditions.

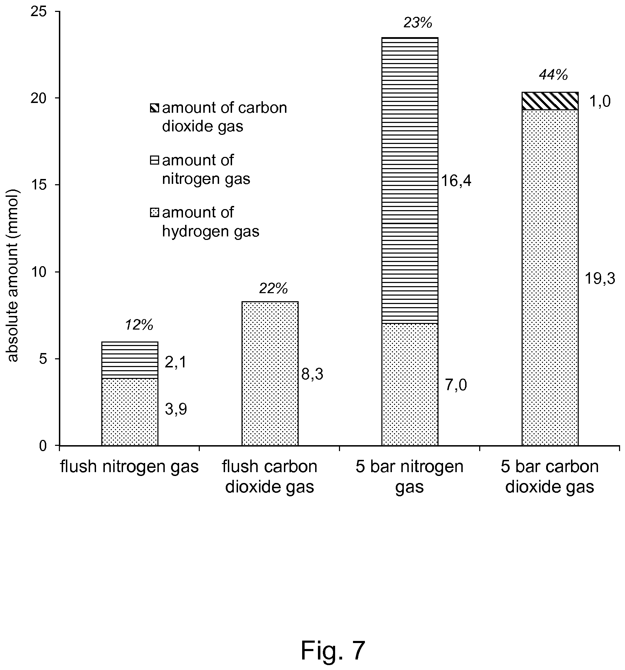

A second series of reference tests was carried out using identical system parameters as used in the first series of reference tests, except for the pH which was adjusted with potassium hydroxide to approximately 14. **Fig. 7** shows the obtained results of the second series of reference experiments with nitrogen gas compared with similar experiments with carbon dioxide gas.

The results show that hydrogen gas is formed under the different tested atmospheric conditions, initiated by the oxidation of iron into magnetite.

In case of flushing with nitrogen gas or carbon dioxide gas, the amount of produced hydrogen gas is lower in comparison with an initial overpressure of 5 bar of the respective gas. This observation suggests that the initial overpressure of gas is relevant for hydrogen production in case the liquid phase initially comprises no carbonates. The results described above for a potassium hydroxide solution (section 2.3) indicate that such overpressure is not needed if the liquid phase is already provided with carbonate ions.

Moreover, a remarkable difference in the obtained gas composition was observed between a nitrogen gas and a carbon dioxide gas atmosphere. Indeed, the amount and purity of the produced hydrogen gas is higher when carbon dioxide gas is used than when nitrogen gas is used, possibly due to the inertness and low water solubility of nitrogen in comparison with carbon dioxide.

In conclusion, the oxidation of iron and the related hydrogen production seem to occur in different ways under anaerobic conditions depending of the applied atmosphere.

As the overall reaction (R. 1) is the same for both systems, the theoretical maximal yield of hydrogen should be independent of the applied gas atmosphere, without considering chemical equilibria. In view of the above results for the the first and second series of reference tests, a carbon dioxide based process as described herein can be evaluated as the best option.

### 2.5 Test at low pH

A reference experiment was conducted to assess the effect of the pH of the reaction medium on the hydrogen yield. The experiment was carried out at 160 °C for 16 hours with the following loading conditions: 4.10⁻² mol metallic iron powder with average grain size of approximately 10 µm, 40 mL of degassed ultrapure water (Milli-Q™ water) and 5 bar carbon dioxide gas (overpressure). Hence, no base was added to the reaction medium. The initial pH of the ultrapure water which was contacted with the metallic iron was between 6.5 and 7.

After 16 hours of reaction, the reactor content was cooled to room temperature. The obtained end pressure at room temperature was approximately 10.5 bar (absolute). The gas phase within the reactor at the end of the process comprised 70 to 75mol% hydrogen gas and 30-25mol% carbon dioxide gas. The analysis of the obtained solid phase by x-ray powder diffraction showed the presence of minimum three crystalline phases: besides Fe⁰ and Fe₃O₄ also FeCO₃ was found. The pH of the reaction medium after reaction was approximately 6.

The final gas composition and reaction medium pH indicate an incomplete dissolution and conversion of carbon dioxide gas to carbonate ions. Hence, less pure hydrogen gas is obtained with respect to systems where a base (e.g. KOH) is added to increase the pH of the reaction medium. The formation of (stable) FeCO₃ may be explained according to the proposed occurring reaction R. 5: following Le Châtelier's principle the conversion of FeCO₃ into Fe₃O₄, which is directly related with the formation of hydrogen gas, occurs preferably at low to negligible carbon dioxide concentrations. Thus, as a result of lower carbon dioxide solubility (as carbonate), a lower amount of hydrogen gas is obtained.

In conclusion, this experiment shows that although the addition of a base is not essential for the synthesis of hydrogen gas according to the processes described herein, improved yield and hydrogen gas purity can be obtained with an initial alkaline reaction medium.

## Claims

1. A process for the synthesis of hydrogen gas (H₂) in a reactor under hydrothermal conditions, comprising
(a) contacting metallic iron (Fe⁰) and/or a Fe(ll) comprising compound with an aqueous composition having a pH of 6.5 or higher and comprising carbonate and bicarbonate ions in a total concentration of at least 0.01 M, thereby obtaining a reaction mixture; and subjecting said reaction mixture to hydrothermal conditions;
(b) reacting said reaction mixture at a reaction temperature above 120°C and not exceeding 240°C and a pressure between 1 bar and 70 bar; thereby obtaining magnetite and hydrogen gas.

2. The process according to claim 1, wherein the total amount of carbon dioxide, carbonic acid, bicarbonate, and carbonate inside said reactor is below 0.75 mole per liter of said aqueous composition.

3. The process according to claim 1 or 2, wherein said Fe(II) comprising compound is selected from the list consisting of iron carbonate, wustite, troilite, pyrrhotite, and pyrite.

4. The process according to any one of claims 1 to 3, wherein said aqueous composition has a pH of 7 or higher and comprises at least 0.05 M of carbonate ions.

5. The process according to any one of claims 1 to 4, wherein said aqueous composition is obtained by dissolving an appropriate amount of a carbonate and/or bicarbonate in an aqueous liquid, and optionally adjusting the pH of said liquid.

6. The process according to any one of claims 1 to 5, wherein said aqueous composition is obtained by dissolving an appropriate amount of carbon dioxide in an aqueous liquid.

7. The process according to any one of claims 1 to 6, wherein the initial atmosphere within said reactor comprises at least 90 w% of carbon dioxide and/or water vapor.

8. The process according to any one of claims 1 to 7, wherein said reaction is carried out at a temperature above 130°C and not exceeding180°C.

9. The process according to any one of claims 1 to 8, wherein said reaction is carried out at a pressure between 5 bar and 30 bar.

10. The process according to any one of claims 1 to 9, wherein said aqueous composition has a pH between 6.5 and 12.

11. The process according to any one of claims 1 to 10, wherein said metallic iron and/or Fe(II) containing compound is provided as a powder.

12. The process according to any one of claims 1 to 11, wherein said reaction is performed in a closed reactor wherein said aqueous composition occupies between 20% and 60% of the internal reactor volume.

13. The process according to any one of claims 1 to 12, wherein said reaction is performed under an atmosphere comprising less than 1 w% of oxygen.

14. The process according to any one of claims 1 to 13, comprising contacting metallic iron and/or a Fe(ll) containing compound with an aqueous composition having a pH of 10 or higher and comprising carbonate ions in a concentration of at least 0.01 M, at a temperature above 130°C and not exceeding 180°C and a pressure between 1 bar and 30 bar; thereby obtaining magnetite and hydrogen gas;
wherein the total amount of carbon dioxide, carbonic acid, bicarbonate, and carbonate inside said reactor is below 0.50 mole per liter of said aqueous composition.

15. A process for treating a waste stream comprising metallic iron and/or a Fe(II) comprising compound, comprising:
- contacting said waste stream with an aqueous composition comprising a total concentration of carbonate and bicarbonate ions of at least 0.01 M;
- if said aqueous composition has a pH of 6.5 or lower, adjusting the pH of said aqueous composition to a pH above 6.5; and
- heating said aqueous composition at a temperature above 100° and not exceeding 240° and a pressure between 1 bar and 50 bar; thereby obtaining magnetite and hydrogen gas.

## Patentansprüche

1. Verfahren zur Synthese von Wasserstoffgas (H₂) in einem Reaktor unter hydrothermischen Bedingungen, umfassend:
(a) Inkontaktbringen von metallischem Eisen (Fe⁰) und/oder einer Fe(II)-umfassenden Verbindung mit einer wässrigen Zusammensetzung, die einen pH-Wert von 6,5 oder höher aufweist und die Carbonat- und Bicarbonationen in einer Gesamtkonzentration von zumindest 0,01 M umfasst, wodurch eine Reaktionsmischung erhalten wird; und Aussetzen der besagten Reaktionsmischung gegenüber hydrothermischen Bedingungen;
(b) Reagieren der besagten Reaktionsmischung bei einer Reaktionstemperatur von mehr als 120 °C und nicht mehr als 240 °C und einem Druck zwischen 1 Bar und 70 Bar; wodurch Magnetit und Wasserstoffgas erhalten wird.

2. Das Verfahren nach Anspruch 1, wobei die Gesamtmenge an Kohlendioxid, Carbonsäure, Bicarbonat und Carbonat im besagten Reaktor unter 0,75 Mol pro Liter der wässrigen Zusammensetzung liegt.

3. Das Verfahren nach Anspruch 1 oder 2, wobei die besagte Fe(II)-umfassende Verbindung aus der Liste ausgewählt ist, bestehend aus Eisencarbonat, Wüstit, Troilit, Pyrrhotit und Pyrit.

4. Das Verfahren nach einem der Ansprüche 1 bis 3, wobei die besagte wässrige Zusammensetzung einen pH-Wert von 7 oder höher aufweist und zumindest 0,05 M Carbonationen umfasst.

5. Das Verfahren nach einem der Ansprüche 1 bis 4, wobei die besagte wässrige Zusammensetzung durch Auflösen einer geeigneten Menge eines Carbonats und/oder Bicarbonats in einer wässrigen Flüssigkeit und optional Einstellen des pH-Werts der besagten Flüssigkeit erhalten wird.

6. Das Verfahren nach einem der Ansprüche 1 bis 5, wobei die besagte wässrige Zusammensetzung durch Auflösen einer geeigneten Menge an Kohlendioxid in einer wässrigen Flüssigkeit erhalten wird.

7. Das Verfahren nach einem der Ansprüche 1 bis 6, wobei die Ausgangsatmosphäre im besagten Reaktor zumindest 90 Gew.-% Kohlendioxid und/oder Wasserdampf umfasst.

8. Das Verfahren nach einem der Ansprüche 1 bis 7, wobei die besagte Reaktion bei einer Temperatur von mehr als 130 °C und nicht mehr als 180 °C durchgeführt wird.

9. Das Verfahren nach einem der Ansprüche 1 bis 8, wobei die besagte Reaktion bei einem Druck zwischen 5 Bar und 30 Bar durchgeführt wird.

10. Das Verfahren nach einem der Ansprüche 1 bis 9, wobei die besagte wässrige Zusammensetzung einen pH-Wert zwischen 6,5 und 12 aufweist.

11. Das Verfahren nach einem der Ansprüche 1 bis 10, wobei das besagte metallische Eisen und/oder die Fe(II)-haltige Verbindung als Pulver bereitgestellt wird.

12. Das Verfahren nach einem der Ansprüche 1 bis 11, wobei die besagte Reaktion in einem geschlossenen Reaktor durchgeführt wird, wobei die besagte wässrige Zusammensetzung zwischen 20 % und 60 % des internen Reaktorvolumens einnimmt.

13. Das Verfahren nach einem der Ansprüche 1 bis 12, wobei die besagte Reaktion in einer Atmosphäre durchgeführt wird, die weniger als 1 Gew.-% Sauerstoff umfasst.

14. Das Verfahren nach einem der Ansprüche 1 bis 13, umfassend das Inkontaktbringen von metallischem Eisen und/oder einer Fe(II) enthaltenden Verbindung mit einer wässrigen Zusammensetzung, die einen pH-Wert von 10 oder höher aufweist und die Carbonationen in einer Konzentration von zumindest 0,01 M umfasst, bei einer Temperatur von mehr als 130 °C und nicht mehr als 180 °C und einem Druck zwischen 1 Bar und 30 Bar; wodurch Magnetit und Wasserstoffgas erhalten wird;
wobei die Gesamtmenge an Kohlendioxid, Carbonsäure, Bicarbonat und Carbonat im besagten Reaktor unter 0,50 Mol pro Liter der wässrigen Zusammensetzung liegt.

15. Verfahren zum Behandeln eines Abfallstroms, der metallisches Eisen und/oder eine Fe(II) umfassende Verbindung umfasst, das umfasst:
- Inkontaktbringen des besagten Abfallstroms mit einer wässrigen Zusammensetzung, die eine Gesamtkonzentration von Carbonat- und Bicarbonationen von zumindest 0,01 M umfasst;
- wenn die besagte wässrige Zusammensetzung einen pH-Wert von 6,5 oder weniger aufweist, Einstellen des pH-Werts der besagten wässrigen Zusammensetzung auf einen pH-Wert von mehr als 6,5; und
- Erhitzen der besagten wässrigen Zusammensetzung bei einer Temperatur von mehr als 100 ° und nicht mehr als 240 ° und einem Druck zwischen 1 Bar und 50 Bar; wodurch Magnetit und Wasserstoffgas erhalten wird.

## Revendications

1. Procédé pour la synthèse d'hydrogène gazeux (H₂) dans un réacteur sous conditions hydrothermales, comprenant
(a) la mise en contact de fer métallique (Fe⁰) et/ou d'un composé comprenant du Fe(II) avec une composition aqueuse ayant un pH de 6,5 ou plus et comprenant des ions carbonate ou bicarbonate à une concentration totale d'au moins 0,01 M, ce qui donne ainsi un mélange réactionnel ; et soumission dudit mélange réactionnel à des conditions hydrothermales ;
(b) la réaction dudit mélange réactionnel à une température réactionnelle supérieure à 120°C et ne dépassant pas 240°C et sous une pression comprise entre 1 bar et 70 bar ; ce qui donne ainsi de la magnétite et de l'hydrogène gazeux.

2. Procédé selon la revendication 1, dans lequel la quantité totale de dioxyde de carbone, d'acide carbonique, de bicarbonate et de carbonate à l'intérieur dudit réacteur est inférieure à 0,75 mole par litre de ladite composition aqueuse.

3. Procédé selon la revendication 1 ou 2, dans lequel ledit composé comprenant du Fe(II) est choisi dans la liste constituée par le carbonate de fer, la wustite, la troilite, la pyrrhotite, et la pyrite.

4. Procédé selon l'une quelconque des revendications 1 à 3, dans lequel ladite composition aqueuse a un pH de 7 ou plus et comprend une concentration d'ions carbonate d'au moins 0,05 M.

5. Procédé selon l'une quelconque des revendications 1 à 4, dans lequel ladite composition aqueuse est obtenue par dissolution d'une quantité appropriée d'un carbonate et/ou bicarbonate dans un liquide aqueux, et éventuellement ajustement du pH dudit liquide.

6. Procédé selon l'une quelconque des revendications 1 à 5, dans lequel ladite solution aqueuse est obtenue par dissolution d'une quantité appropriée de dioxyde de carbone dans un liquide aqueux.

7. Procédé selon l'une quelconque des revendications 1 à 6, dans lequel l'atmosphère initiale à l'intérieur dudit réacteur comprend au moins 90 % en poids de dioxyde de carbone et/ou de vapeur d'eau.

8. Procédé selon l'une quelconque des revendications 1 à 7, dans lequel ladite réaction est mise en oeuvre à une température supérieure à 130°C et ne dépassant pas 180°C.

9. Procédé selon l'une quelconque des revendications 1 à 8, dans lequel ladite réaction est mise en oeuvre sous une pression comprise entre 5 bar et 30 bar.

10. Procédé selon l'une quelconque des revendications 1 à 9, dans lequel ladite composition aqueuse a un pH compris entre 6,5 et 12.

11. Procédé selon l'une quelconque des revendications 1 à 10, dans lequel ledit fer métallique et/ou composé contenant du Fe(II) est fourni sous la forme d'une poudre.

12. Procédé selon l'une quelconque des revendications 1 à 11, dans lequel ladite réaction se déroule dans un réacteur fermé dans lequel ladite composition aqueuse occupe entre 20 % et 60 % du volume interne du réacteur.

13. Procédé selon l'une quelconque des revendications 1 à 12, dans lequel ladite réaction se déroule dans une atmosphère comprenant moins de 1 % en poids d'oxygène.

14. Procédé selon l'une quelconque des revendications 1 à 13, comprenant la mise en contact de fer métallique et/ou d'un composé contenant du Fe(II) avec une composition aqueuse ayant un pH de 10 ou plus et comprenant des ions carbonate à une concentration d'au moins 0,01 M, à une température supérieure à 130°C et ne dépassant pas 180°C et sous une pression comprise entre 1 bar et 30 bar ; ce qui donne ainsi de la magnétite et de l'hydrogène gazeux ;
dans lequel la quantité totale de dioxyde de carbone, d'acide carbonique, de bicarbonate et de carbonate à l'intérieur dudit réacteur est inférieure à 0,50 mole par litre de ladite composition aqueuse.

15. Procédé pour traiter un flux de déchets comprenant du fer métallique et/ou un composé comprenant du Fe(II), comprenant :
- la mise en contact dudit flux de déchets avec une composition aqueuse comprenant une concentration totale d'ions carbonate et bicarbonate d'au moins 0,01 M ;
- si ladite composition aqueuse a un pH de 6,5 ou moins, l'ajustement du pH de ladite composition aqueuse à un pH supérieur à 6,5 ; et
- le chauffage de ladite composition aqueuse à une température supérieure à 100° et ne dépassant pas 240° et sous une pression comprise entre 1 bar et 50 bar ; ce qui donne ainsi de la magnétite et de l'hydrogène gazeux.
